# EUROPEAN PATENT APPLICATION

(11) **EP 3 306 014 A1**
(43) Date of publication of application: **11.04.2018**
(21) Application number: 16193121.7
(22) Date of filing: 10.10.2016
(51) Int. Cl.: E04G 23/08, B65G 11/20, E04F 17/12

(54) **CHUTE ASSEMBLY**

(71) Applicant: Heerema Fabrication Group SE, 3336 LH Zwijndrecht (NL)
(72) Inventor: MOLENAAR, Rick Adrianus Pieter, 3336 LH ZWIJNDRECHT (NL); VAN VOORST TOT VOORST, Derrick Elbert Baron, 3336 LH ZWIJNDRECHT (NL)
(74) Representative: EP&C

(57) **Abstract**

The present invention relates to a chute assembly for the transportation of scaffolding parts which fall from an elevated location downward to a location on the ground level or at a desired lower level and stopping the scaffolding parts, the chute assembly comprising:
- a flexible chute which comprises an entry and an exit, wherein the entry is positioned at the elevated location and the exit is positioned at the ground level or at the desired lower level, the entry being configured to be moved to various elevated locations during scaffolding work, the flexible chute being configured to transport falling a scaffolding part on its way downward,
- a support frame positioned at the ground level or at the desired lower level,
- a receiving device provided at the exit of the chute and supported by the support frame, the receiving device comprising:
• a receiving compartment defined by a housing, the receiving compartment being configured to receive the incoming scaffolding part,
• a shock absorbing device configured to decelerate the scaffolding part and to absorb the shock of the incoming scaffolding part,
• a discharge mechanism configured to discharge the scaffolding part outwardly from the receiving compartment to a pick-up location.

## Description

### Field of the invention

The present invention relates to a chute assembly for transporting scaffolding parts to a lower location and to a method of transporting scaffolding parts to a lower location.

### Background of the invention

Chutes for dropping building material are known. For instance, WO2008031173A1 discloses a chute assembly for dropping rubble from a scaffold. Such a chute works and is used on many construction sites. This chute and other similar chutes are limited to dropping material which does not need to be re-used.

However, in particular the disassembly of a scaffolding involves a vertical downward transport of scaffolding parts which need to be re-used. Typical scaffolding parts involve pipes, planks and connectors. The known chute is not suitable for this purpose, because the scaffolding parts would become damaged upon impact at the end of the chute.

Therefore, scaffolding parts are generally transported downward in a manual process. This process involves several construction workers standing above one another on the scaffold. The workers pass down the scaffolding parts one by one in a manual fashion, each time handing over the scaffolding parts from one worker to another worker who is positioned below the other worker. In large scaffoldings, this is a very time consuming process.

Moreover, this process involves considerable risk, because if a scaffolding part is dropped, it may hit a worker standing in a lower position. This may result in material damage and serious injury or even death.

In the present invention the insight was developed that not only building rubble can be transported through the chute, but also the scaffolding parts itself. This saves a lot of time and results in lower risks for workers.

In other fields of technology, chutes for transporting reusable materials are known. For instance GB2156789A1 discloses an apparatus to let barrels drop through a chute in a controlled fashion. However, the device of GB2156789A1 is not suitable for scaffolding parts and fails in particular to provide a safe device. The falling barrels are free to move outside the desired path, thereby causing potential unsafe situations for workers.

In the present invention the insight has been developed that the known devices are not able to safely transport scaffolding parts downward in a well-controlled manner.

### Object of the invention

It is an object of the invention to provide a device and method with which scaffolding parts can be transported downwards in a safe, well-controlled and time-efficient manner.

### Summary of the invention

The invention provides a chute assembly for the transportation of scaffolding parts which fall from an elevated location downward to a location on the ground level or at the desired lower level and stopping the scaffolding parts, the chute assembly comprising:
- a flexible chute which comprises an entry and an exit, wherein the entry is positioned at the elevated location and the exit is positioned at the ground level or at the desired lower level, the entry being configured to be moved to various elevated locations during scaffolding work, the flexible chute being configured to transport a falling scaffolding part on its way downward,
- a support frame positioned at the ground level or at the desired lower level,
- a receiving device provided at the exit of the chute and supported by the support frame, the receiving device comprising:
   - a receiving compartment defined by a housing, the receiving compartment being configured to receive the incoming scaffolding part,
   - a shock absorbing device configured to decelerate the scaffolding part and to absorb the shock of the incoming scaffolding part,
   - a discharge mechanism configured to discharge the scaffolding part outwardly from the receiving compartment to a pick-up location.

A major advantage of the present invention over the prior art is the increase in safety. The compartment is constructed to form a closed system, in the sense that the kinetic energy of incoming parts is safely dissipated and the incoming parts cannot uncontrollably leave the compartment and injure a worker. The invention eliminates human involvement to a large degree, thereby increasing safety.

Another benefit is the time savings resulting from the invention. During research, time savings have been recorded in comparison with the manual human chain method. These time savings can be directly translated into cost savings. The time saving increases with an increasing height of the scaffold.

The present invention allows the transportation of scaffolding parts without damaging them. This advantageously allows re-use of the scaffolding parts.

It is noted that in practice some slight damage may occur to the scaffolding parts as a result of the impact. Typically this type of damage would typically involve scratches or small dents. Such damage may mean that the parts can be reused, but only a limited number of times, for instance 10 or 20 times (or perhaps a higher number or a limited time period). After being used 10 or 20 times or for a limited time period, the scaffolding parts would be discarded.

In an embodiment, the housing comprises a floor and an exit opening, wherein the at least the floor of the housing is pivotable about a substantially horizontal pivot axis which is substantially parallel to an entry direction of the scaffolding part, between:
- a first, horizontal orientation in which the floor is substantially horizontal, the first position being the receiving position in which scaffolding parts enters the housing, and
- a second, inclined orientation, in which the floor is pivoted over an angle and the floor is inclined over said angle, wherein the scaffolding parts slides or rolls through the exit opening out of the compartment.

The pivoting action of the pivotable floor may be carried out by a pivoting device, or may be manual. A pivoting device allows a highly automated way of operating the present invention.

In an embodiment there may be:
- a third, inclined orientation, wherein the floor is further pivoted over an angle and the floor is inclined over said angle in the first pivoting direction to a maximum predetermined pivoting angle and stopped by the stopping means, and wherein the scaffolding parts is located on the curved support surface,
- a fourth orientation, wherein the floor is pivoted over an angle opposite to the angle of the third orientation, resulting in a pushing of the scaffolding parts by the pushing device toward the exit, until the scaffolding parts is pushed off the curved support surface.

At the second, inclined position the housing may be pivoted to a maximum predetermined pivoting angle at which the housing is configured to be stopped by stopping means provided on the housing track. An advantage of the stopping means is that they induce a vibration on the housing. The vibration can overcome the frictional resistance of the scaffolding part located on the floor of the housing. Thereby facilitating the discharge of the scaffolding parts out of the housing.

In an embodiment, the housing comprises protective side walls and a top cover which are configured to prevent the incoming scaffolding part from making an uncontrolled and undesired movement to the outside of the compartment, thereby hitting a worker standing next to the housing, wherein the side walls are fixed to the floor and pivot together with the floor about the substantially horizontal pivot axis.

In an embodiment, the floor of the housing is a smooth surface of a hard metal with a low friction coefficient. This has the benefit that the scaffolding part slides smoother over the floor towards the damping plate. This in turn prevents potential damage to both the housing and the scaffolding parts.

In an embodiment, the discharge mechanism comprises a pivotable door which is constructed to close the exit opening in a first door position and to open the exit opening in a second door position.

In an embodiment, the discharge mechanism comprises a pusher member and a guide track, wherein the discharging step comprises three steps, wherein in the first discharge step the scaffolding part rolls or slides over the inclined floor toward and through the exit opening, wherein in a second discharge step the scaffolding part drops on a drop position on the guide track, wherein in a third discharge step the pusher member pushes the scaffolding part along the guide track from the drop position to the pickup location, in particular during the pivoting movement of the floor from the inclined orientation back to the horizontal orientation.

In an embodiment, the pivotable door is pivotably connected to the rest of the housing via a hinge, the hinge defining a horizontal panel pivot axis, the door being a side panel of the housing.

In an embodiment, the guide track defines a threshold ridge, and wherein in the second, inclined orientation of the housing the pivotable door is in the second door position, and wherein in said second door position a lower edge of the door engages the threshold ridge of the guide track or defines a gap with said threshold ridge which is smaller than 20mm, thereby preventing a user to stick his hand through said gap when the housing is in the second, inclined orientation.

In an embodiment, the flexible chute comprises a plurality of chute segments connected to one another and configured to telescope relative to one another for varying the length of the flexible chute, and wherein the flexible chute comprises a suspension device for suspending the entry of the flexible chute at a the elevated location, the entry of the flexible chute being configured to be moved both horizontally and vertically between a first elevated entry location and a second elevated entry location .

In an embodiment, the shock absorbing device comprises a pivotable damping plate which is connected to the housing via a hinge, and a damper connected to the damping plate, wherein the damper is connected at one end to the housing, and at another end to the damping plate, and wherein a body of cushioning material is provided on a side of the damping plate which is hit by the incoming scaffolding part. The damping plate may be oriented vertically.

In an embodiment, the damper is provided with an adjustable arm, so the damper can be adjusted to different positions.

The cushioning material has the benefit that it prevents damage to the scaffolding parts due to the impact. This ensures a longer lifetime of the scaffolding parts.

In an embodiment, the damping plate extends to the guide track and follows the trajectory of the guide track. This has the benefit that when the housing is pivoted, still no scaffolding parts can shoot out of the housing. The extended damping plate prevents this from happening.

In an embodiment, the discharge mechanism comprises:
- a guiding track provided on the support frame, wherein the guiding track has a curved shape when viewed in the longitudinal direction, wherein the guiding track is configured to guide the housing during the pivoting movement,
- wheels provided on the housing, wherein the wheels are configured to follow the guiding track.

In an embodiment, the flexible chute is connected to the housing via an annular bearing, allowing the housing to pivot relative to the chute. Because the chute is connected to the housing, any scaffolding parts can only exit the chute at the entry of the housing. Thus any situations wherein scaffolding parts shoots out of the chute prior to entering the housing are thereby prevented, which is beneficial for the safety.

In an embodiment, the chute assembly further comprises a sorting device positioned at the pickup location, the sorting device comprising:
- a pick-and-place robot arm comprising at least one gripper,
- multiple containers or placing locations for placing the dropped scaffolding parts,
- one or more sensors for sensing the arrival of an scaffolding parts on the pickup location,
- a control unit configured for:
   - receiving input signals from the one or more sensors on the type of scaffolding parts that is present at the pick-up location, and
   - determining the type of scaffolding parts and the container or placing location which is appropriate for said scaffolding parts, and
   - controlling the pick-and-place robot arm in order to pick up the scaffolding parts from the pickup location and to place the scaffolding parts in the appropriate container or placing location.

The advantage of the sorting device is that human error is eliminated, for the human element, after dropping the scaffolding part into the chute, is taken out of the process.

The gripper may have six degrees of freedom.

The invention further relates to a method of transporting scaffolding parts from an elevated location downward to a location on the ground level or at the desired lower level and stopping the scaffolding parts, the method comprising:
a) providing the chute assembly according to any of the preceding claims at a scaffolding, wherein the entry of the flexible chute is positioned at an elevated entry location on the scaffolding,
b) feeding a scaffolding part to the entry of the flexible chute and letting the scaffolding part fall through the flexible chute,
c) receiving the scaffolding part from the flexible chute in the compartment, wherein the scaffolding part enters the compartment in a first direction, and decelerating the scaffolding part by the shock absorbing device,
d) discharging the scaffolding part from the compartment to the pickup location by the discharge mechanism in a second direction, the second direction being different from the first direction.

In an embodiment of the above described method, the method comprises the steps:
a) in a first discharge step, pivoting the housing about a housing pivot axis, wherein the floor of the housing is pivoted from a horizontal orientation to an inclined orientation, and letting the scaffolding part slide or roll outwardly through an exit opening in the housing,
b) in a second discharge step, letting the scaffolding part drop from the floor of the compartment onto a drop location of a guiding track, and
c) in a third discharge step, pivoting the housing about the housing pivot axis from the inclined orientation back to the horizontal orientation, and pushing the scaffolding part along the guiding track from the drop position to the pickup location by the pusher member.

The method may comprise a step wherein, after a number of scaffolding parts have been dropped, received and subsequently discharged, the flexible chute entry is moved from a first elevated entry location to a second elevated entry location.

In an embodiment, the receiving device is configured to receive the scaffolding parts travelling in a first direction, and to discharge the scaffolding parts from the compartment in a second direction, wherein the second direction is substantially perpendicular to the first direction.

In an embodiment, the flexible chute has a substantially vertical section at the entry, a substantially horizontal section at the exit, and a curved section between the substantially vertical section and the substantially horizontal section.

The flexible chute may also be a continuous curve and not have any truly vertical section, for instance following a catenary line.

In an embodiment, the shock absorbing device is configured to absorb the shock of scaffolding parts which enters the compartment in a substantially horizontal direction.

In an embodiment, the shock absorbing device is provided at a downstream end of the compartment.

The horizontal floor pivot axis may be aligned with the horizontal axis of the exit of the flexible chute. The horizontal floor pivot axis may be the same as the pivot axis of the housing.

In an embodiment, the length of the housing of the receiving device is greater than the length of the scaffolding parts.

In an embodiment, the entry of the chute is configured to be moved by a telehandler or crane.

In an embodiment, the compartment is elongate and comprises a longitudinal axis which is horizontal.

Substantially horizontal is not necessarily completely horizontal, but an angle at which the scaffolding part can be received and the shock can be absorbed. The angle can be up to 8 degrees.

In an embodiment, the housing comprises an open front end and a closed back end, the open front end being configured as a housing entry.

In an embodiment, the housing is fixed to the floor and pivots together with the floor.

In an embodiment, the flexible chute has a substantially vertical section at the entry, a substantially horizontal section at the exit, and a curved section between the substantially vertical section and the substantially horizontal section, wherein the shock absorbing device is configured to absorb the shock of scaffolding parts which enters the compartment in a substantially horizontal direction.

### List of figures

The previous and other features and advantages of the present invention will be more fully understood from the following detailed description of exemplary embodiments with reference to the attached drawings. Like reference numerals refer to like parts.
Figure 1 shows an isometric view of the chute assembly according to the invention
Figure 2 shows a front view of the housing floor in a first, horizontal orientation.
Figure 3A shows a front view of the housing floor in a second, inclined orientation.
Figure 3B shows a front view of the housing floor in a second, inclined orientation in an embodiment having a pivoting device.
Figure 4 shows a detailed isometric view of the shock absorbing device.

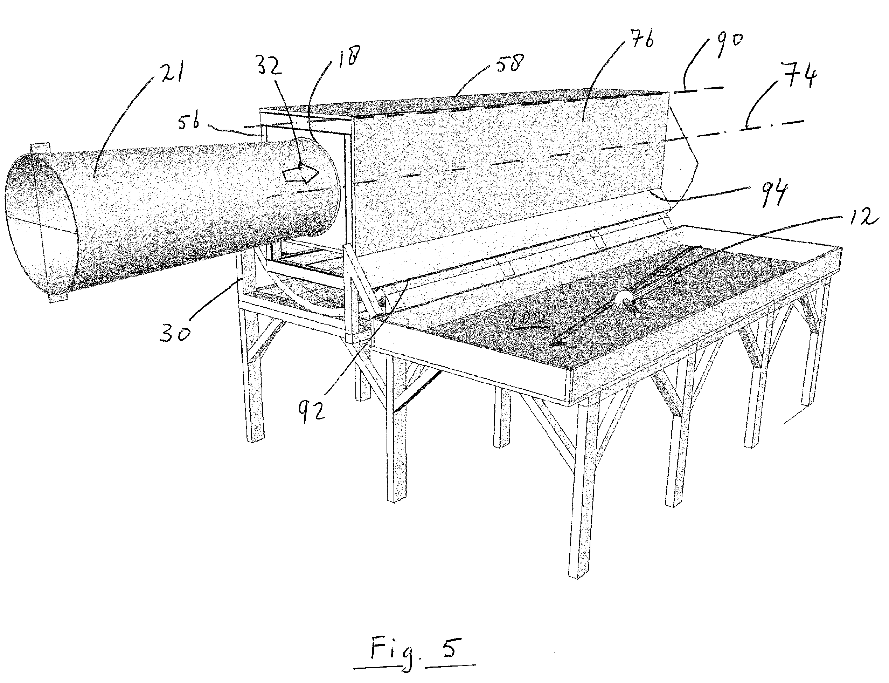

Figure 5 shows an isometric view of an embodiment according to the invention.
Figure 6 shows an isometric view of an embodiment of the invention, including a sorting device.
Figure 7 shows a schematic view of a sensor arrangement according to the invention.

### Detailed description of the figures

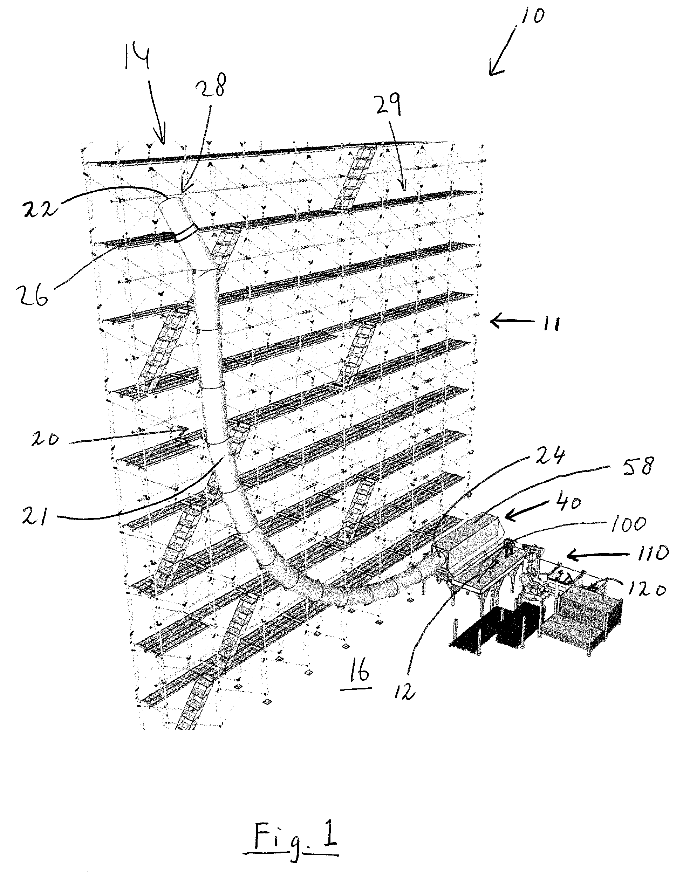

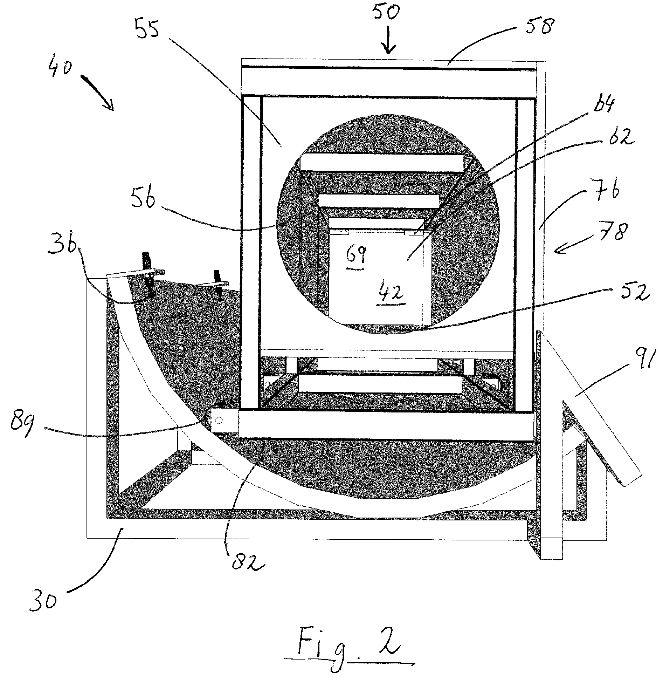

Turning to figures 1, 2 3A, 3B, 4 and 5, the chute assembly 10 according to the invention is shown for the transportation of scaffolding parts 12 which fall from an elevated location 14 downward to a location on the ground level or at the desired lower level and stopping the scaffolding parts without damaging them.

The chute assembly comprises a flexible chute 20 configured to be varied in length L1. The flexible chute comprises an entry 22 and an exit 24. The entry 22 is positioned at the elevated location 14 and the exit is positioned at the ground level 16 or at the desired lower level. The entry is configured to be moved to various elevated locations during scaffolding work. This allows the entry to be positioned at the location where the disassembly of the scaffolding actually takes place. The flexible chute is configured to transport a falling scaffolding part on its way downward.

The chute assembly further comprises a support frame 30 positioned at the ground level or at the desired lower level. The support frame is generally made of steel parts and is a rigid structure.

The chute assembly comprises a receiving device 40 provided at the exit 24 of the flexible chute 20. The receiving device 40 is supported by the support frame. The receiving device comprises a receiving compartment 42 which is defined by a housing 50. The receiving compartment is configured to receive the incoming scaffolding part.

The flexible chute 20 is connected to the housing via an annular bearing 18. The bearing allows the housing to pivot relative to the chute. The substantially horizontal pivot axis 74 thus is substantially equal to the longitudinal axis of the flexible chute exit.

The receiving device further comprises a shock absorbing device 60 configured to decelerate the scaffolding part and to absorb the shock of the incoming scaffolding part.

The receiving device further comprises a discharge mechanism 70 configured to discharge the scaffolding part outwardly from the receiving compartment to a pick-up location 100.

The flexible chute 20 comprises a plurality of chute segments 21 connected to one another. The chute segments 21 are capable of telescoping relative to one another for varying the length of the flexible chute. The flexible chute has a suspension device 26 for suspending the entry of the flexible chute at the elevated location. The suspension device may be a hook or other kind of connector. The entry 22 of the flexible chute can be moved both horizontally and vertically between a first elevated entry location 28 and a second elevated entry location 29.

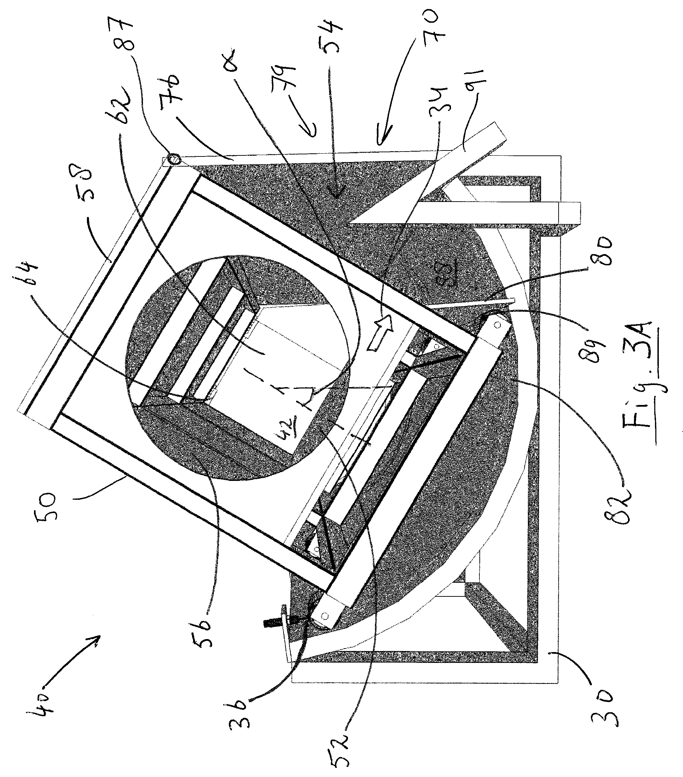

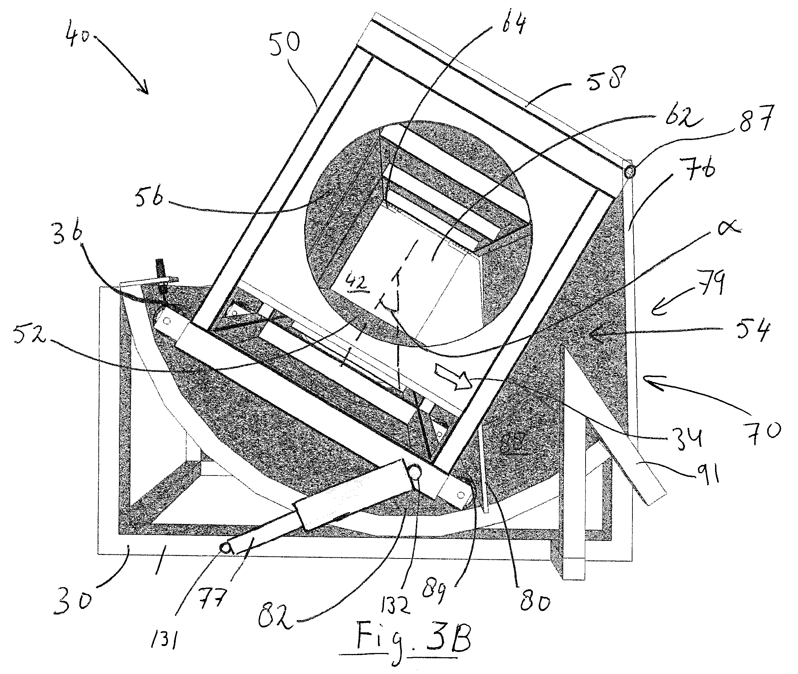

The housing has a floor 52 and an exit opening 54. The pivoting of the housing may be a manual operation as shown in fig. 3A. The discharge mechanism 70 may also comprise a pivot device 72 for pivoting at least the floor 52 of the housing about a substantially horizontal pivot axis 74. The pivot device 72 may be a drive which drives wheels 89, or for instance a hydraulic or pneumatic cylinder 77 which acts on the housing itself. Fig. 3B shows a variant having a hydraulic or pneumatic cylinder 77. The cylinder 77 extends between a first mounting point 131 on the support fame 30 and a second mounting point 132 on the housing. Other embodiments are also conceivable.

The substantially horizontal pivot axis 74 is substantially parallel to an entry direction of the scaffolding part.

The floor 52 pivots between:
- as shown in figure 2, a first, horizontal orientation in which the floor 52 is substantially horizontal, the first position being the receiving position in which the scaffolding part enters the housing, and
- as shown in figures 3A and 3B, a second, inclined orientation, in which the floor is pivoted over an angle α and the floor is inclined over said angle, wherein the scaffolding part slides or rolls through the exit opening 54 out of the compartment.

The housing has protective side walls 56 and a top cover 58. These are configured to prevent the incoming scaffolding part from making an uncontrolled and undesired movement to the outside of the compartment, thereby hitting a worker standing next to the housing, wherein the side walls are fixed to the floor and pivot together with the floor about the substantially horizontal pivot axis.

The discharge mechanism 70 has a pivotable door 76. The pivotable door closes the exit opening 54 in a first door position 78 and opens the opening in a second door position 79. The door pivots in particular under the influence of gravity.

The discharge mechanism comprises a pusher member 80 and a guide track 82. The discharging itself occurs in several steps. In case of three steps, in a first discharge step the scaffolding part rolls or slides over the inclined floor toward and through the exit opening 54.

While the floor is still in the inclined orientation, in a second discharge step, the scaffolding part drops on a drop position 88 on the guide track 82.

In a third discharge step, housing including the floor pivots back to the horizontal orientation and in this movement the pusher member 80 pushes the scaffolding part along the guide track 82 from the drop position to the pickup location. The pusher member 80 is a plate which is rigidly connected to the housing and extends in a downward, inclined direction from the housing.

The pivotable door 76 which opens and closes the exit opening 54 is pivotably connected to the rest of the housing via a hinge 87. The hinge defines a horizontal panel pivot axis 90. The door 76 is a side panel of the housing. The door therefore also prevents the scaffolding parts from undesired movements to outside the compartment prior to opening the exit opening 54, i.e. when the housing is in the horizontal orientation.

The pivoting of the door is determined by a door guide 91. When the housing pivots, the door guide 91 engages the pivotable door 76 and forces the door to the open position. The door guide 91 is located at the front side 55 of the housing and engages a side of the pivotable door 76. The door guide more or less keeps the pivotable door 76 in a vertical orientation, although this is not required. The pivoting movement of the pivotable door therefore is a pivoting movement relative to the housing.

In said second door position a lower edge 94 of the pivotable door engages the threshold ridge 92 of the guide track. It may also define a gap with said threshold ridge which is relatively small, in particular smaller than 20mm. This prevents a worker from sticking his hand through said gap when the housing is in the second, inclined orientation and reaching into the compartment. In this way the compartment remains closed for the user in all orientations, significantly increasing the safety of the overall system.

The discharge mechanism has a guide track 82 provided on the support frame. The guide track has a curved shape when viewed in the longitudinal direction. The guide track is configured to guide the housing during the pivoting movement. Wheels 89 are provided on the housing. The wheels follow the guide track.

The guide track 82 defines a threshold ridge 92. The threshold ridge forms the end of the guide track 82. The pusher member 80 pushes the scaffolding part over the threshold ridge 92. This occurs when the housing has returned to the first, horizontal orientation. At the moment when the pusher member pushes the scaffolding part over the threshold ridge 92, the pivotable door 76 has returned to the first closed door position.

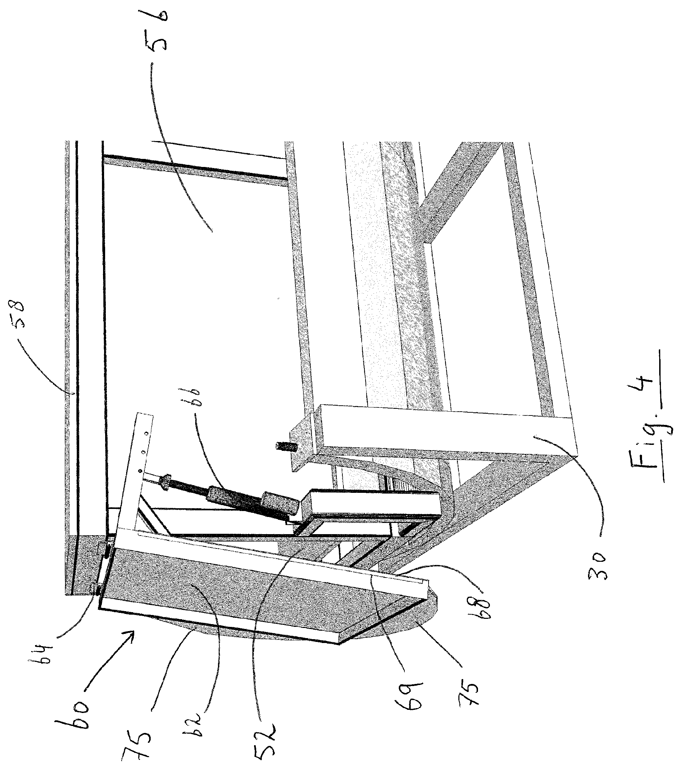

Turning in particular to figure 4, the shock absorbing device 60 has a pivotable damping plate 62 which is connected to the housing via a second hinge 64. In the horizontal position of the floor, the hinge 64 defines a horizontal pivot axis of the damping plate 62. The shock absorbing device further has a damper 66. The damper is connected at one end to the housing, and at another end to the damping plate. One end of the damper can be adjusted to different positions with an adjustable arm. The damping plate 62 has extensions 75 which keep the rear side of the compartment closed in all orientations of the housing.

A body 68 of cushioning material is provided on a side 69 of the damping plate which is hit by the incoming scaffolding part. This side 69 faces the inside of the receiving compartment. The cushioning material prevents damage to the scaffolding parts as they hit the damping plate. It also lowers the noise level due to impact.

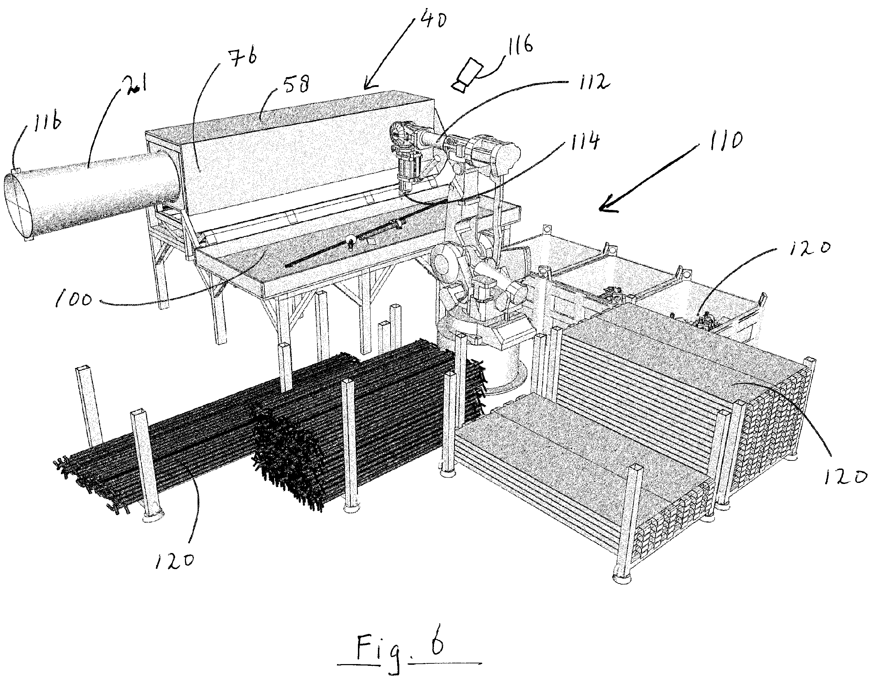

Turning to figure 6, the chute assembly may also have a sorting device 110 positioned at the pickup location 100. The sorting device can have a pick-and-place robot arm 112 with at least one gripper 114. The gripper may have six (6) degrees of freedom. Multiple containers or placing locations for placing the dropped scaffolding parts are positioned around the robot arm 112. The containers of placing locations are more particularly placed within reaching distance of the robot arm.

One or more sensors 116, for instance a camera, may be placed on the pick-up location or at any other location along the chute for sensing the arrival and identification of the scaffolding parts.

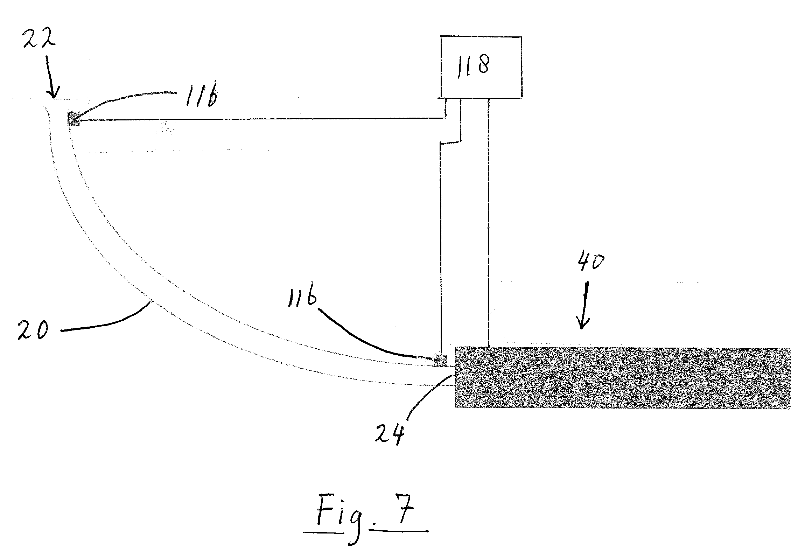

Turning to figure 7, it may also be possible to position sensors 116 at the flexible chute entry and at the chute exit.

With reference to figures 6 and 7, the control unit 118 on the sorting device receives input signals from the one or more sensors 116 on the identification of a scaffolding part that is present at the pick-up location. The control unit comprises software to identify the scaffolding part and to allocate the scaffolding part to the container or the placing location 120. The control unit informs the pick-and-place robot arm 112 in order to pick up the scaffolding part from the pick-up location and to place the scaffolding part in the appropriate container or placing location.

The control unit may also control the pivot device 72 in order to achieve a highly automated process.

### Operation

Returning to figure 1, in use, the chute assembly 10 according to the invention is provided at a scaffolding 11. The entry 22 of the flexible chute 20 is positioned at an elevated entry location 14 on the scaffolding.

A scaffolding part is fed to the entry 22 of the flexible chute. By releasing the scaffolding part, the scaffolding part falls through the flexible chute.

The scaffolding part is received from the flexible chute in the receiving compartment 42. The scaffolding part enters the compartment in a first direction 32 at a high speed. The shock absorbing device 60 decelerates the scaffolding part. Next the scaffolding part is discharged from the compartment to the pickup location 100 by the discharge mechanism. The discharging occurs in a second direction 34. The second direction is different from the first direction. In a preferred embodiment, the second direction is substantially perpendicular to the first direction.

The discharge process may be subdivided in several steps. In a first discharge step, the housing is pivoted about the substantially horizontal pivot axis 74. The floor of the housing is pivoted from a horizontal orientation to an inclined orientation. The entire housing may pivot together with the floor. The horizontal orientation is shown in figure 2. The inclined orientation is shown in figures 3A and 3B.

Figures 3A and 3B further show the pivotable door 76. When the housing is inclined, the pivotable door remains substantially vertical.

The inclination lets the scaffolding part slide or roll outwardly through an exit opening 54 in the housing. When the housing reaches a predetermined inclination, it is stopped by a stopping device 36. Engaging the stopping device with the wheels 89 results in a vibration of the housing. The vibration helps overcome the frictional resistance between the floor and the scaffolding part, thereby allowing the scaffolding part to slide out of the compartment.

In a second discharge step, the scaffolding part drops from the floor of the compartment onto a drop location of the guide track 82.

In a third discharge step, the housing pivots about the substantially horizontal pivot axis 74 from the inclined orientation back to the horizontal orientation. The pusher member 80 pushes the scaffolding part along the guiding track from the drop position to the pickup location 100.

Pivoting the housing can be performed manually or by an pivot device.

In use, after a number of scaffolding parts have been dropped, received and subsequently discharged, the flexible chute entry is moved from a first elevated entry location 28 to a second elevated entry location 29. This further accelerates the disassembly process of the scaffold.

It will be obvious to a person skilled in the art that the details and the arrangement of the parts may be varied over considerable range without departing from the scope of the claims.

## Claims

1. Chute assembly (10) for the transportation of scaffolding parts (12) which fall from an elevated location (14) downward to a location on the ground level (16) or at a desired lower level and stopping the scaffolding parts, the chute assembly comprising:
- a flexible chute (20) which comprises an entry (22) and an exit (24), wherein the entry is positioned at the elevated location (14) and the exit is positioned at the ground level (16) or at the desired lower level, the entry being configured to be moved to various elevated locations during scaffolding work, the flexible chute being configured to transport a falling scaffolding part on its way downward,
- a support frame (30) positioned at the ground level or at the desired lower level,
- a receiving device (40) provided at the exit of the chute and supported by the support frame, the receiving device comprising:
• a receiving compartment (42) defined by a housing (50), the receiving compartment being configured to receive the incoming scaffolding part,
• a shock absorbing device (60) configured to decelerate the scaffolding part and to absorb the shock of the incoming scaffolding part,
• a discharge mechanism (70) configured to discharge the scaffolding part outwardly from the receiving compartment to a pick-up location (100).

2. Chute assembly according to claim 1, wherein the housing comprises a floor (52) and an exit opening (54), wherein at least the floor of the housing is pivotable about a substantially horizontal pivot axis (74) which is substantially parallel to an entry direction of the scaffolding part, between:
- a first, horizontal orientation in which the floor (52) is substantially horizontal, the first position being the receiving position in which the scaffolding part enters the housing, and
- a second, inclined orientation, in which the floor is pivoted over an angle (α) and the floor is inclined over said angle, wherein the scaffolding part slides or rolls through the exit opening (54) out of the compartment.

3. Chute assembly according to claim 1 or 2, wherein the housing comprises protective side walls (56) and in particular a top cover (58) which are configured to prevent the incoming scaffolding part from making an uncontrolled and undesired movement to the outside of the compartment, thereby hitting a worker standing next to the housing, wherein the side walls are fixed to the floor and pivot together with the floor about the substantially horizontal pivot axis.

4. Chute assembly according to any of the preceding claims, wherein the discharge mechanism (70) comprises a pivotable door (76) which is constructed to close the exit opening (54) in a first door position (78) and to open the opening in a second door position (79).

5. Chute assembly according to any of the preceding claims, wherein the discharge mechanism comprises a pusher member (80) and a guide track (82), wherein the discharging step comprises three steps, wherein in the first discharge step the scaffolding part rolls or slides over the inclined floor toward and through the exit opening, wherein in a second discharge step the scaffolding part drops on a drop position (88) on the guide track, wherein in a third discharge step the pusher member pushes the scaffolding part along the guide track from the drop position to the pickup location, in particular during the pivoting movement of the floor from the inclined orientation back to the horizontal orientation.

6. Chute assembly according to any of claims 3-5, wherein the pivotable door (76) is pivotably connected to the rest of the housing via a hinge (87), the hinge defining a horizontal panel pivot axis (90), the door being a side panel of the housing.

7. Chute assembly according to any of claims 5-6, wherein the guide track defines a threshold ridge (92), and wherein in the second, inclined orientation of the housing the pivotable door (76) is in the second door position (79), and wherein in said second door position a lower edge (94) of the door engages the threshold ridge of the guide track or defines a gap with said threshold ridge which is smaller than 20mm, thereby preventing a worker to stick his hand through said gap when the housing is in the second, inclined orientation.

8. Chute assembly according to any of the preceding claims, wherein the flexible chute comprises a plurality of chute segments (21) connected to one another and configured to telescope relative to one another for varying the length of the flexible chute, and wherein the flexible chute comprises a suspension device (26) for suspending the entry of the flexible chute at a the elevated location, the entry of the flexible chute being configured to be moved both horizontally and vertically between a first elevated entry location (28) and a second elevated entry location (29).

9. Chute assembly according to any of the preceding claims, wherein the shock absorbing device comprises a pivotable damping plate (62) which is connected to the housing via a second hinge (64), and a damper (66) connected to the damping plate, wherein the damper is connected at one end to the housing, and at another end to the damping plate, and wherein a body (68) of cushioning material is provided on a side (69) of the damping plate which is hit by the incoming scaffolding part.

10. Chute assembly according to any of the preceding claims, wherein the discharge mechanism comprises:
- a guide track (82) provided on the support frame, wherein the guide track has a curved shape when viewed in the longitudinal direction, wherein the guide track is configured to guide the housing during the pivoting movement,
- wheels (89) provided on the housing, wherein the wheels are configured to follow the guiding track.

11. Chute assembly according to any of the preceding claims, wherein the flexible chute is connected to the housing via an annular bearing (18), allowing the housing to pivot relative to the chute.

12. Chute assembly according to any of the preceding claims, further comprising a sorting device (110) positioned at the pick-up location, the sorting device comprising:
- a pick-and-place robot arm (112) comprising at least one gripper (114,
- multiple containers or placing locations (120) for placing the dropped scaffolding parts,
- one or more sensors (116) for sensing the arrival and identification of a scaffolding part on the pickup location,
- a control unit (118) configured for:
• receiving input signals from the one or more sensors on the arrival of scaffolding parts at the pick-up location, and
• identifying the scaffolding part and allocating the container or placing location, and
• informing the pick-and-place robot arm (112) in order to pick up the scaffolding part from the pickup location and to place the scaffolding part in the appropriate container or placing location.

13. Method of transporting scaffolding parts (12) from an elevated location downward to a location on the ground level or at the desired lower level and stopping the scaffolding parts, the method comprising:
a) providing the chute assembly according to any of the preceding claims at a scaffolding (11), wherein the entry (22) of the flexible chute (20) is positioned at an elevated entry location (14) on the scaffolding,
b) feeding a scaffolding part to the entry (22) of the flexible chute and letting the scaffolding part fall through the flexible chute,
c) receiving the scaffolding part from the flexible chute in the receiving compartment (42), wherein the scaffolding part enters the compartment in a first direction (32), and decelerating the scaffolding part by the shock absorbing device (60),
d) discharging the scaffolding part from the compartment to the pickup location (100) by the discharge mechanism in a second direction (34), the second direction being different from the first direction.

14. Method according to the preceding method claim, the method comprising the steps:
a) in a first discharge step, pivoting the housing about a housing pivot axis, wherein the floor of the housing is pivoted from a horizontal orientation to an inclined orientation, and letting the scaffolding part slide or roll outwardly through an exit opening (54) in the housing,
b) in a second discharge step, letting the scaffolding part drop from the floor of the compartment onto a drop location of a guide track (82), and
c) in a third discharge step, pivoting the housing about the housing pivot axis from the inclined orientation back to the horizontal orientation, and pushing the scaffolding part along the guiding track from the drop position to the pickup location (100) by the pusher member (80).

15. Method according to the any of the preceding method claims, wherein after a number of scaffolding parts have been dropped, received and subsequently discharged, the flexible chute entry is moved from a first elevated entry location to a second elevated entry location.
